# NEUE EUROPÄISCHE PATENTSCHRIFT

(11) **EP 1 214 813 B2**
(45) Veröffentlichungstag und Bekanntmachung des Hinweises auf die Entscheidung über den Einspruch: **24.12.2008**
(45) Hinweis auf die Patenterteilung: 02.03.2005
(21) Anmeldenummer: 00971232.4
(22) Anmeldetag: 25.08.2000
(51) Int. Cl.: H04L 12/18, H04Q 7/24, H04M 3/487

(54) **VERFAHREN UND SYSTEM ZUR DATENÜBERTRAGUNG VON INHALTSDATEN**
METHOD AND SYSTEM FOR TRANSMITTING INFORMATIONAL CONTENT DATA
PROCEDE ET SYSTEME POUR LA TRANSMISSION DE DONNEES DE CONTENU D'INFORMATIONS

(30) Priorität: 09.09.1999 DE 19943058
(43) Veröffentlichungstag der Anmeldung: 19.06.2002
(73) Patentinhaber: IPCom GmbH & Co. KG, 82049 Pullach (DE)
(72) Erfinder: HASEMANN, Joerg-Michael, D-27321 Thedinghausen (DE)
(74) Vertreter: Gigerich, Jan
(86) Internationale Anmeldenummer: PCT/DE2000/002915
(87) Internationale Veröffentlichungsnummer: WO 2001/019020

(56) Entgegenhaltungen:
- EP-A1- 0 849 923
- WO-A-99/16226
- WO-A1-99/16226
- WO-A2-99/16277
- DE-A- 19 730 363
- RECOMMENDATION GSM 03.41 Juli 1999,
- RECOMMENDATION GSM 02.03 VERSION ETS300502 September 1994,

## Beschreibung

### STAND DER TECHNIK

Die vorliegende Erfindung betrifft ein Verfahren und ein System zur Übertragung von Informations-Inhaltsdaten an eine Vielzahl von Endgeräten.

Informationen werden zunehmend multimedial als Text,Bild, Sprache, Musik, Video usw. durch Informationsanbieter zur Verfügung gestellt. Im weltumspannenden Internet (www world wide web) werden multimedial aufbereitete Informationen mit Hilfe der Seitenbeschreibungssprache HTML als miteinander verknüpfte multimediale Dokumente angeboten. Die einzelnen Seiten bzw. Dokumente der Anbieter werden normalerweise Punkt zu Punkt, d.h. von dem Informationsanbieter hin direkt zu dem Endgerät übertragen, siehe beispielsweise die offenbarungen der Patentanmeldungen DE-A-19 730 363 oder WO-A-99/16226. Um an für ihn interessante Informationen zu gelangen, muß der Benutzer eines Endgerätes, beispielsweise eines Computers oder eines mobilen Telefons, die Verbindung zu dem Informationsanbieter aufbauen und die von ihm gewünschte Information abfragen. Möchte beispielsweise ein Benutzer, der im Verkehrsraum München ansässig ist, Verkehrsnachichten über den Raum München erhalten, muß er diese Informationen bei dem Informationsanbieter abfragen, indem er über ein Telekommunikationsnetz eine Verbindung zu dem Informationsanbieter aufbaut. Nach dem Aufbau eines Übertragungskanals zu dem Informationsanbieter und dem Endgerät des Benutzers werden dann die gewünschten Informationen als Informations-Inhaltsdaten an das Endgerät, beispielsweise ein mobiles Telefon, übertragen.

Der Aufbau der Verbindung zu dem Informationsanbieter ist für den Benutzer des Endgerätes mühevoll und kostet ihn Zeit. Darüber hinaus erfolgt der Verbindungsaufbau und die Übertragung der Informations-Inhaltsdaten auf Anforderung des Endgerätbenutzers hin, d.h. oft zu Tageszeiten an denen die Übertragung der Informations-Inhaltsdaten besonders kostspielig ist.

Ein weiterer Nachteil besteht darin, daß der Endgerätbenutzer nicht an allen zur Verfügung gestellten Informationen der Informationsanbieter interessiert ist, sondern lediglich an den für ihn relavanten Informationen.
Um die für ihn relevanten Informationen zu erhalten, muß der Endgerätbenutzer eine Selektion der vom Informationsanbieter zur Verfügung gestellten Informationen durchführen. Diese Selektion bzw. Auswahl ist für den Endgerätbenutzer ebenfalls mühevoll und zeitraubend.

Aus der Recommendation GSM 03.41 version 7.1.0 ist ein so genannter CBS-Dienst (Cell Broadcast Service) bekannt, der es einer Anzahl nicht bestätigter allgemeiner Nachrichten erlaubt, zu allen Empfängern innerhalb einer bestimmten Region übertragen zu werden.

Die EP 0 849 923 A1 beschreibt ein Verfahren und ein System, um während eines niedrigen Verkehrsaufkommens Teilnehmern Telekommunikationsdienste zur Verfügung zu stellen.

In der Recommendation GSM 02.03 version ETS 300 502 September 1994 werden Teledienste empfohlen, die von einem GSM Netzwerk in Verbindung mit anderen Netzwerken unterstützt werden sollen.

Aus der WO 99/16226 ist ein Verfahren und eine Vorrichtung zur Übertragung von Newsgroup-Informationen an eine Vielzahl von Nutzern bekannt.

Die WO 99/16277 befasst sich mit Multicast in einem Mobilfunknetz.

Die Recommendation GSM 04.12 version 7.0.0 beschreibt, wie der Short Message Service Cell Broadcast (SMSCB) von Multifunkinterface unterstützt ist.

### VORTEILE DER ERFINDUNG

Das erfindungsgemäße Verfahren zur Übertragung von Informations-Inhaltsdaten mit den Merkmalen des Patentanspruches 1 sowie das System zur Übertragung von Informations-Inhaltsdaten mit den Merkmalen des Patentanspruches 13 weist den besonderen Vorteil auf, daß der Endgerätbenutzer die für ihn relevanten Informationen in einfacher und bequemer Weise erhält.

Darüber hinaus können die für den Endgerätbenutzer relevanten Informationen besonders kostengünstig an ihn übertragen werden.

Die der vorliegenden Erfindung zu Grunde liegende Idee besteht darin, über eine zentrale Informations-Weiterleitungsstation den Endgerätbenutzern automatisch relevante Informationen zukommen zu lassen, ohne daß die Endgerätbenutzer die Information bei Informationsanbietern abfragen müssen.

In den Unteransprüchen finden sich vorteilhafte Weiterbildungen und Verbesserungen des in Patentanspruch 1 angegebenen erfindungsgemäßen Verfahren und des in Patentanspruch 13 angegebenen erfindungsgemäßen Informations-Übertragungs systems.

Gemäß einer bevorzugten Weiterbildung wird der übertragene Informationsdatenblock in dem Endgerät mittels eines Informations-Beschreibungs-Datenblocks auf seine Relevanz für das Endgerät geprüft.

Bei einer weiteren bevorzugten Weiterbildung wird der als relevant erkannte Informations-Übertragungs-Datenblock in einem Zwischenspeicher des Endgerätes abgespeichert und ist dort für den Benutzer aufrufbar.

Bei einer weiteren bevorzugten Weiterbildung erhält der Informations-Beschreibungs-Datenblock Informationsdatenwerte bezüglich des geografischen Gültigkeitsraumes, des Gültigkeitzeitraumes, des Datenformats, der Kodierungsart sowie der Art und des Typs der übertragenen Informations-Inhaltsdaten.

Dies bietet den besonderen Vorteil, daß die an die Endgerätbenutzer übertragenen Informations-Datenblöcke nach unterschiedlichen Kriterien gefiltert werden können.

Bei einer weiteren bevorzugten Weiterbildung erfolgt das Laden der Informations-Inhaltsdaten und der Informations-Beschreibungsdaten von den Informationsanbietern durch die zentrale Weiterleitungsstation abhängig von einem Anforderungssignal,das von der zentralen Weiterleitunsstation an den Informationsanbieter gesendet wird.

Bei einer weiteren bevorzugten Weiterbildung erfolgt das Laden der Informations-Inhaltsdaten und der Informations-Beschreibungsdaten von den Informationsanbietern durch die zentrale Weiterleitungsstation automatisch in regelmäßigen, einstellbaren Zeitabständen.

Bei einer weiteren bevorzugten Weiterbildung erfolgt das Übertragen der Informations-Datenblöcke von der Informations-Weiterleitungsstation an die Vielzahl von Endgeräten automatisch in regelmäßigen, einstellbaren Zeitabständen.

Bei einer weiteren bevorzugten Weiterbildung werden die Informations-Datenblöcke von der Informations-Weiterleitungsstation gleichzeitig an eine Vielzahl von Endgeräten über ein Verteilnetz übertragen.

Bei einer weiteren bevorzugten Weiterbildung werden die Informations-Datenblöcke von der Informations-Weiterleitungsstation an die Endgeräte verschlüsselt übertragen.

Dies hat den Vorteil, daß Dritte nicht unerwünschterweise auf die übertragenen Inhaltsdaten zugreifen können.

Gemäß einer weiteren bevorzugten Weiterbildung enthalten die von der Weiterleitungsstation an die Endgeräte übertragenen Informations-Beschreibungs-Datenblöcke Verschlüsselungs-Beschreibungsdaten, die die Art der Verschlüsselung der übertragenen Informations-Datenblöcke angeben.

Dies bietet den Vorteil, daß der Endgerätbenutzer das entspechende Entschlüsselungsprogramm bei dem Informationsanbieter anforden kann.

Gemäß einer weiteren bevorzugten Weiterbildung werden die Entschlüsselungsdaten zur Entschlüsselung der Informations-Datenblöcke von dem Informationsanbieter auf Anforderung an dessen Endgerät übertragen.

Gemäß einer weiteren bevorzugten Weiterbildung werden die Information-Inhaltsdaten und die Informations-Beschreibungsdaten von dem Informationsanbieter durch die zentrale Informations-Weiterleitungsstation über ein erstes Übertragungsnetz geladen und die Informations-Datenblöcke von der zentralen Informations-Weiterleitungsstation an die Endgeräte über ein zweites Übertragungsnetz übertragen.

Gemäß einer weiteren bevorzugten Weiterbildung werden die Informations-Datenblöcke über ein Funknetz an eine Vielzahl von mobilen Endgeräten übertragen.

Dies bietet den Vorteil, daß die Endgeräte nicht kostenintensiv mit der zentralen Informations-Weiterleitungsstation fest vernetzt werden müssen.

### ZEICHNUNGEN

Ausführungsbeispiele der Erfindung sind in den Zeichnungen dargestellt und werden in der folgenden Beschreibung näher erläutert.

Es zeigen:
- Figur 1: eine schematische Darstellung zur Erläuterung des erfindungsgemäßen Übertragungssytems zur Übertragung von Informations-Inhaltsdaten an eine Vielzahl von Endgeräten;
- Figur 2: ein Ablaufdiagramm des erfindungsgemäßen Verfahrens zur Übertragung von Informations-Inhaltsdaten an eine Vielzahl von Endgeräten gemäß der Erfindung;
- Figur 3: ein Ablaufdiagramm des Empfangvorgangs der übertragenen Daten durch ein Endgerät gemäß der Erfindung.

### BESCHREIBUNG DER AUSFÜHRUNGSBEISPIELE

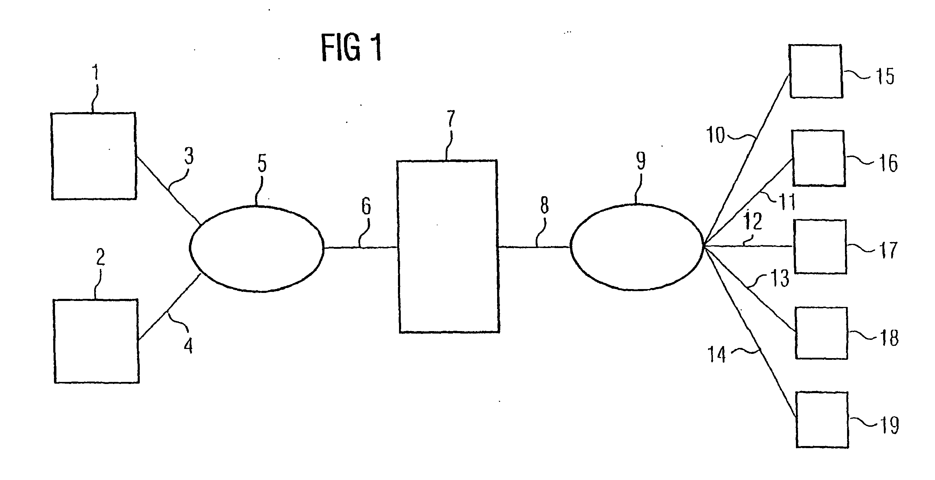

Figur 1 zeigt eine schematische Darstellung des erfindungsgemäßen Informations-Übertragungssystems zur Übertragung von Information-Inhaltsdaten von Informationsanbietern zu Endgeräten über eine zentrale Informations-Weiterleitungsstation.

Bei dem in Figur 1 gezeigten Beispiel sind zwei Informationsanbieter-Stationen 1,2 gezeigt. Die Informationsanbieter-Stationen sind über Anschlußleitungen 3,4 mit einem ersten Übertragungsnetz 5 verbunden. An dem ersten Übertragungsnetz 5 ist über eine Anschlußleitung 6 eine zentrale Informations-Weiterleitungsstation 7 angeschlossen. Die zentrale Informations-Weiterleitungsstation 7 ist über eine Anschlußleitung 8 mit einem zweiten Übertragungsnetz 9 verbunden. Über Anschlüsse 10, 11, 12, 13 ,14 ist eine Vielzahl von Endgeräten 15, 16, 17, 18, 19 mit dem zweiten Übertragungsnetz 9 verbunden.

Die beiden Übertragungsnetze 5, 9 können beliebige Übertragungsnetze zur Übertragung von Daten sein, wobei das zweite Übertragungsnetz 9 vorzugsweise ein Funknetz zur Übertragung von Daten an mobile Endgeräte 15-19 ist.

Bei einer bevorzugten Ausführungsform ist das erste Übertragungsnetz ein Festnetz, beispielsweise das Internet.

In den Informationsanbieter-Stationen 1,2 sind in internen Speichereinrichtungen bzw. Datenbanken Informationen für die Benutzer der Endgeräte 15-19 abgespeichert. Bei dem ersten Informationsanbieter kann es sich beispielsweise um einen Anbieter von Verkehrsinformationsdaten handeln. Der zweite Informationsanbieter stellt beispielsweise bundesweit Zugfahrpläne bereit. Die Anzahl der Informationsanbieter und somit die Anzahl der Informationsanbieter-Stationen, die mit dem ersten Übertragungsnetz 5 verbunden sind, ist beliebig hoch. Die in den Speichereinrichtungen der Informationsanbieter abgespeicherten Informationsdaten werden durch die zentrale Informations-Weiterleitungsstation 7 in einen internen Speicher der Infomations-Weiterleitungsstation geladen. Das Laden der Informationen in den internen Speicher der zentralen Informations-Weiterleitungsstation 7 erfolgt entweder durch ein über das Übertragungsnetz 5 gesendetes Anforderungssignal oder in regelmäßigen Zeitabständen durch die Informationsanbieter-Stationen 1,2. Das zweite Übertragungsnetz 9 ermöglicht vorzugsweise die gleichzeitige Übertragung von Informationen an eine Vielzahl von Endgeräten 15-19, beispielsweise über Broadcast-Kanäle. Das zweite Übertragungsnetz 9 ist bei einer bevorzugten Ausführungsform ein zellular aufgebautes Mobilfunknetz. Die Endgeräte 15-19 sind bei dieser bevorzugten Ausführungsform Mobilfunkstationen bzw. Handys.

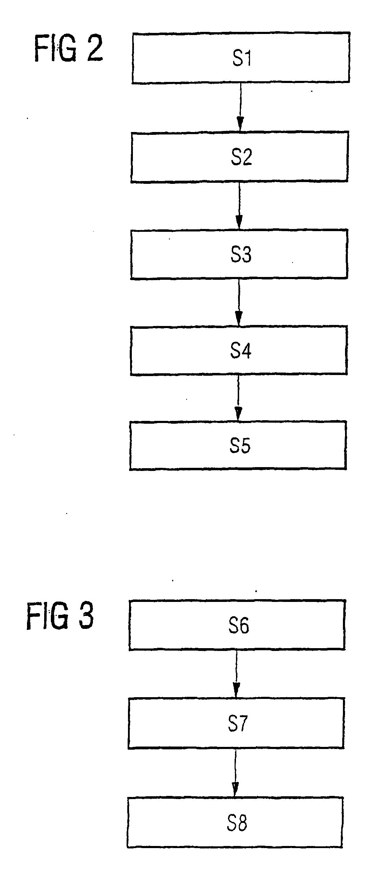

Figur 2 zeigt ein Ablaufdiagramm des erfindungsgemäßen Verfahrens zur Übertragung von Information-Inhaltsdaten an eine Vielzahl von Endgeräten 15-19.

In einem Schritt S1 werden Informations-Inhaltsdaten und Informations-Beschreibungsdaten in einem Speicher von mindestens einer Informationsanbieter-Station 1,2 bereit gestellt.

In einem Schritt S2 werden die Informations-Inhaltsdaten, d.h. beispielsweise die Verkehrinformationsdaten oder die Fahrplandaten, sowie Informations-Beschreibungsdaten in einen Speicher der zentralen Informations-Weiterleitungsstation 7 geladen. Die Informations-Beschreibungsdaten werden von den Informationsanbieteren zur Verfügung gestellt und geben an, um welche Information es sich handelt.

Beispielsweise geben die Informations-Beschreibungsdaten, daß es sich um Fahrplandaten des Sommerfahrplans oder des Winterfahrplans der deutschen Bundesbahn handelt.

Bei einem Schritt S3 werden durch eine Berechnungseinrichtung der zentralen Informations-Weiterleitungsstation 7 Informations-Datenblöcke basierend auf den geladenen Informations-Inhaltsdaten und Informations-Beschreibungs-Datenblöcke basierend auf den geladenen Informations-Beschreibungsdaten erzeugt.

In einem Schritt S4 wird der jeweilige Informations-Inhalts-Datenblock und der zugehörige Informations-Beschreibungs-Datenblock durch die Berechnungseinrichtung der zentralen Informations-Weiterleitungsstation 7 miteinander zu einem Übertragungs-Datenblock verknüpft.

Der verknüpfte Übertragungs-Datenblock wird in einem Schritt S5 von der Informations-Weiterleitungsstation 7 über das zweite Übertragungsnetz 9 auf die Vielzahl von Endgeräten 15-19 übertragen.

Das Laden der Informations-Inhaltsdaten und der Informations-Beschriebungsdaten durch die zentrale Informations-Weiterleitungsstation 7 im Schritt S2 erfolgt bei einer bevorzugten Ausführungsform des erfindungsgemäßen Verfahrens abhängig von einem Anforderungssignal, das von der zentralen Weiterleitungsstation 7 über das erste Übertragungnetz 5 an die Informationsanbieter-Station 2 gesendet wird. Alternativ erfolgt das Laden der Informations-Inhaltsdaten und das Laden der Informations-Beschreibungsdaten im Schritt S2 automatisch in regelmäßigen, einstellbaren Zeitabständen durch die Informationsanbieter-Stationen 1,2.

Der im Schritt S5 von der zentralen Informations-Weiter leitungsstation 7 an die Geräte 15-19 gesendete Übertragungs-Datenblock enthält einen Informations-Beschreibungsdatenblock. Dieser Informations-Beschreibungsdatenblock weist mehrere Informations-Datensätze auf, die den geografischen Gültigkeitsraum, die zeiliche Gültigkeit bzw. den Gültigkeitszeitraum, das Datenformat, die Kodierungsweise der Daten und die Art der übertragenen Informations-Inhaltsdaten angeben. Der übertragene geografische Gültigkeitsraum gibt an, in welchem geografischen Gebiet die übertragenen Informationen gültig bzw. relevant sind. Der Datensatz, der den geografischen Gültigkeitsraum angibt, ist bei einer bevorzugten Weiterbildung hierarchisch aufgebaut, d.h. die übertragenen Informations-Inhaltsdaten werden beispielsweise als landesweit, stadtweit oder zellenweit gültig deklariert. Die in den Informationsdatensätzen angegebenen geografischen Gültigkeitsräume können sich auch überlappen. Es können auch mehrere geografische Gültigkeitsräume für die versendeten Informations-Inhaltsdaten angegeben werden.

Der Informations-Beschreibungs-Datenblock gibt die Art der übertragenen Informations-Inhaltsdaten, d. h. ob es sich beispielsweise um Verkehrsfunk, Stadtinformationen usw. handelt, und den Typ der übertragenen Informations-Inhaltsdaten an , d.h. ob es sich um Textdaten, Videodaten, Sarachdaten oder Audiodaten handelt.

Die Figur 3 stellt ein Ablaufdiagramm dar zur Erläuterung des Empfangs von übertragenen Datenblöcken durch die Endgeräte 15-19.

In einem Schritt S6 wird durch das jeweilige Endgerät 15-19 die Relevanz bzw. die Gültigkeit des übertragenen Informations- bzw. Inhaltsdatenblocks mittels des übertragenen Informations-Beschreibungs-Datenblocks geprüft. Beispielsweise überprüft das Endgerät 15-19, ob die übertragenen Informationen zeitlich gültig sind. Erkennt das Endgerät, daß der übertragene Datenblock gültig ist, wird er in einem Zwischenspeicher des Endgeräts in einem Schritt S7 abgepeichert.

In einem Schritt S8 werden die in dem Zwischenspeicher abgespeicherten Informations-Inhaltsdatenblöcke durch den Endgerätbenutzer zur Benutzung aufgerufen. In einer alternativen Auführungsform lösen die übertragenen Datenblöcke Ereignisse bzw. Vorgänge in den Endgeräten 15-19 aus. Beispielsweise werden täglich zu einer bestimmten Uhrzeit Inhaltsdaten bzw. Dokumente auf einer Anzeige des Endgeräts 15 -19 angezeigt, ohne das der Endgerätbenutzer den übertragenen Informations-Inhaltsdatenblock aufrufen muß. Die Uhrzeit sowie die Art des anzuzeigenden Dokuments ist vorzugsweise über eine Tastatur des Endgerätes 15-19 durch den Endgerätbenutzer einstellbar.

Zwischengespeicherte Datenblöcke werden aus den Zwischenspeichern der Endgeräte 15-19 vorzugsweise automatisch gelöscht, wenn sie ihre zeitliche oder lokale Gültigkeit verlieren. Ist das Endgerät 15-19 beispielsweise ein mobiles Funktelefon und bewegt sich das mobile Funktelefon von einer ersten Netz-Zelle zu einer zweiten Netz-Zelle, werden diejenigen Informations-Inhalts-Datenblöcke gelöscht, die lediglich für die erste Netz-Zelle relevant sind.

Die von der zentralen Weiterleitungsstation 7 über das zweite Übertragungsnetz 9 an die Endgeräte 15-19 übertragenen Datenblöcke, werden vorzugsweise verschlüsselt übertragen. Der übertragene Informations-Beschreibungs-Datenblock enthält dabei Verschlüsselungs-Beschreibungsdaten, die den Endgerätbenutzer über die Art der Verschlüsselung der übertragenen Datenblöcke informieren. Der Endgerätbenutzer erhält vorzugsweise ein Entschlüsselungsprogramm zur Entschlüsselung der über das Übertragungsnetz 9 übertragenen Datenblöcke von dem entsprechenden Informationsanbieter über ein drittes Übertragungsnetz.

Handelt es sich bei den Endgeräten 15-19 um Mobilfunktelefone werden die Entschlüsselungsdaten der Entschlüsselungsprogramme von den Informationsanbieter-Stationen 1,2 vorzugsweise als SMS-Nachicht geräteabhängig, d.h. abhängig von der SIM-Karten-ID an das Endgerät 15-19 übertragen. Die Entschlüsselungsdaten werden vorzugsweise in regelmäßigen Zeitabständen erneuert.

Hinsichtlich der Verschlüsselung schickt der Endgerätebenutzer vorzugsweise seine SIM-Karte an den lizenzvergebenden Service-Provider. Von diesem erhält er einen Schlüssel. Dieser Schlüssel zusammen mit der SIM-Karte, auf die das Entschlüsselungsprogramm im Endgerät direkten Zugriff hat, erlaubt die Dekodierung bzw. Entschlüsselung der vom Service-Provider angebotenen Daten.

Bei einer bevorzugten Weiterbildung erhält die zentrale Weiterleitungsstation 7 fortwährend Informationen über die aktuelle Zeit sowie die Regionen, in denen sich die mobilen Endgeräte 15-19 aktuell befinden.

Bei einer weiteren bevorzugten Ausführungsform werden Ereignisse, die mit bestimmten übertragenen Datenblöcken verknüpft sind durch sogenannte Plug-In's verarbeitet. Der Vorteil von Plug-In's besteht darin, daß sie genau auf die Bedürfnisse des Endgerätbenutzers abgestimmt werden können, wodurch Speicherplatz und Ladezeit gespart werden.

Das erfindungsgemäße Verfahren und das erfindungsgemäße System zur Übertragung von Informations-Inhaltsdaten ist vielseitig einsetzbar. Interessante Anwendungsbeispiele sind die Bereitstellung von lokalen Informationen, beispielsweise Stadtführer, Stadtpläne, Hotelführer, Restaurantführer, Verkehrsinformationen, Veranstaltungskalender, Sight-Seeing Tours, Fahrpläne für Busse und Bahnen, Kinoprogramme usw..

Durch die übertragenen Datenblöcke können in den Endgeräten Ereignisse ausgelöst bzw. getriggert werden. Hierdurch werden weitere Anwendungsmöglichkeiten eröffnet, beispielsweise Nachichten, Börsenticker mit aktuellen Informationen, Pop-up-Nachichten im Sommerschlußverkauf, Unwetterwarnungen, Stauankündigungen auf der Autobahn, Umleitungsempfehlungen usw.. Die Informationen werden in den Endgeräten 15-19 dem Endgerätbenutzer angezeigt oder diesem auch akkustisch mitgeteilt.

Die zentrale Informations-Weiterleitungsstation 7 kann über verschiedene Übertragungsnetze an eine Vielzahl unterschiedlicher Informationsanbieter angeschlossen werden. Durch einen Anschluß an das Internet bestehen weitere Anwendungsmöglichkeiten, beispielsweise Verweise im Stadtführer zu den Web-Seiten verschiedener Restaurants oder Verweise zu Taxi-Web-Seiten mit Bestellmöglichkeit oder Verweise auf Pizzazubringdienste. Ist mit dem über Übertragungsnetz 9 an die Endgeräte 15-19 übertragenen Datenblock ein Ereignis verknüpft, kann beispielsweise eine Anwendung wie ein Internet-Browser in dem Endgerät 15-19 aktiviert werden. Der Browser hat dann Zugriff auf die in dem Zwischenspeicher des Endgerätes 15-19 gespeicherten Informations-Inhaltsdaten.

## Patentansprüche

1. Verfahren zur Übertragung von Informations-Inhaltsdaten an eine Vielzahl von Endgeräten mit den folgenden Schritten:
a) Bereitstellen (S1) von Informations-Inhaltsdaten und Informations-Beschreibungsdaten in einem Speicher von mindestens einer Informationsanbieter-Station (1, 2);
b) Laden (S2) der Informations-Inhaltsdaten und der Informations-Beschreibungsdaten in einen Speicher einer zentralen Informations-Weiterleitungs-Station (7);
c) Erzeugen (S3) eines Informations-Inhältsdatenblocks basierend auf den geladenen Informations-Inhaltsdaten und eines Informations-Beschreibungsdatenblocks basierend auf den geladenen Informations-Beschreibungsdaten in der zentralen Informations-Weiterleitungsstation
d) Verknüpfen (S4) des Informations-Inhaltsdatenblocks und des Informations-Beschreibungsdatenblocks zu einem Übertragungs-Datenblock;
e) Übertragen (S5) des Überiragungs-Datenblocks von der zentralen Informations-Weiterleitungsstation (7) an eine Vielzahl von Endgeräten (15-19), wobei mit dem über ein Übertragungsnetz (9) an die Endgeräte (15-19) übertragenen Datenblock ein Ereignis verknüpft ist, das in dem Endgerät (15-19) eine Anwendung, wie ein Internet-Browser, aktiviert.

2. Verfahren nach Anspruch 1, **dadurch gekennzeichnet, daß** der Übertragungs-Datenblock in dem Endgerät (15-19) mittels des Informations-Beschreibungs-Datenblocks auf seine Relevanz für das Endgerät geprüft wird.

3. Verfahren nach Anspruch 1 oder 2, **dadurch gekennzeichnet, daß** ein als relevant erkannter Übertragungs-Datenblock in einem Zwischenspeicher des Endgerätes (15-19) abgespeichert wird und durch einen Endgerätbenutzer aufrufbar ist.

4. Verfahren nach einem der vorangehenden Ansprüche, **dadurch gekennzeichnet, daß** der Informations-Beschreibungs-Datenblock Informationsdatensätze bezüglich des geografischen Gültigkeitsraumes, des Gültigkeitszeitraumes, des Datenformats, der Kodierungsweise bzw. Verschlüsselung, der Art und des Typs des übertragenen Informations-Inhalts-Datenblocks enthält.

5. Verfahren nach einem der vorangehenden Ansprüche, **dadurch gekennzeichnet, daß** das Laden (S2) der Informations-Inhaltsdaten und der Informations-Beschreibungsdaten abhängig von einem Anforderungssignal erfolgt, das von der zentralen Weiterleitungsstation (7) an die Informtionsanbieter-Station (1,2) gesendet wird.

6. Verfahren nach einem der vorangehenden Ansprüche, **dadurch gekennzeichnet, daß** das Laden (S2) der Informationsinhalts-Daten und der Informations-Beschreibungsdaten automatisch in regelmäßigen, einstellbaren Zeitabständen erfolgt.

7. Verfahren nach einem der vorangehenden Ansprüche, **dadurch gekennzeichnet, daß** das Übertragen (S5) des Übertragungs-Datenblocks bzw. -blöcke von der Informations-Weiterleitungsstation (7) an die Endgeräte (15-19) automatisch in regelmäßigen einstellbaren Zeitabständen erfolgt.

8. Verfahren nach einem der vorangehenden Ansprüche, **dadurch gekennzeichnet, daß** das Übertragen(S5) der Übertragungs-Datenblocks bzw. -blökke von der Informations-Weiterleitungsstation (7) gleichzeitig an eine Vielzahl von Endgeräten (15-19) über ein Verteilnetz erfolgt.

9. Verfahren nach einem der vorangehenden Ansprüche, **dadurch gekennzeichnet, daß** der bzw. die Übertragungs-Datenblöcke verschlüsselt übertragen werden.

10. Verfahren nach einem der vorangehenden Ansprüche, **dadurch gekennzeichnet, daß** der Information-Beschreibungs-Datenblock Verschlüsselungs- und Beschreibungsdaten enthält, die die Art der Verschlüsselung des Übertragungs-Datenblocks angeben.

11. Verfahren nach einem der vorangehenden Anprüche, **dadurch gekennzeichnet, daß** die Entschlüsselungsdaten zu Entschlüsselung des Übertragungs-Datenblocks von der Informationsanbieter-Station (1,2) an das Endgerät (15-19) übertragen werden.

12. Verfahren nach einem der vorangehenden Ansprüche, **dadurch gekennzeichnet, daß** die Informations-Inhalts-Daten und die Information-Beschreibungsdaten von der zentralen Informations-Weiterleitungsstation (7) über ein erstes Übertragungsnetz (5) geladen werden und der Übertragungs-Datenblock an die Vielzahl von Endgeräten (15-19) über ein zweites Übertragungsnetz (9) übertragen wird.

13. Informations-Übertragungssystem mit:
mindestens einer Informationsanbieterstation (1, 2) zur Bereitstellung von Informations-Inhaltsdaten und Informations-Beschreibungsdaten;
einem ersten Übertragungsnetz (5) zur Übertragung der Informations-Inhaltsdaten und der Informations-Beschreibungsdaten; einer zentralen Informations-Weiterleitungsstation (7), die einen Speicher zum Abspeichern der übertragenen Daten und eine Berechnungseinrichtung zum Erzeugen eines Informations-Inhaltsdatenblocks basierend auf den Informations-Inhaltsdaten, zum Erzeugen eines Informations-Beschreibungsdatenblocks basierend auf den übertragenen Informations-Beschreibungsdaten und zum Verknüpfen des Informations-Inhaltsdatenblocks bzw. -blöcke mit dem Informations-Beschreibungsdatenblocks bzw. -blöcke zu einem Übertragungs-Datenblock aufweist, und
einem zweiten Übertragungsnetz (9) zur gleichzeitigen Übertragung des Übertragungs-Datenblocks bzw. -blöcke an eine Vielzahl von Endgeräten (15-19), wobei mit dem über das Übertragungsnetz (9) an die Endgeräte (15-19) übertragenen Datenblock ein Ereignis verknüpft ist, das in dem Endgerät (15-19) eine Anwendung, wie ein Intemet-Browser, aktiviert.

14. Informationsübertragungssystem nach Anspruch 13, **dadurch gekennzeichnet, daß** das erste Übertragungsnetz (5) ein Festnetz ist.

15. Informationsübertragungssytem nach Anspruch 14, **dadurch gekennzeichnet, daß** das erste Übertragungsnetz (5) das Internet ist.

16. Informationsübertragungssystem nach Anspruch 13 **dadurch gekennzeichnet, daß** das zweite Übertragungsnetz (9) ein zellular aufgebautes Funknetz ist .

17. Informationsübertragungssytem nach einem der Ansprüche 13-16, **dadurch gekennzeichnet, daß** die Endgeräte (15-19) Mobilfunkstationen sind.

18. Informationsübertragungssystem nach Anspruch 17, **dadurch gekennzeichnet, daß** die Endgeräte (15-19) über ein drittes Übertragungsnetz mit den Informationsanbieter-Stationen (1,2) zur Übertragung von Entschlüsselungsprogrammen verbunden sind.

## Claims

1. Method for transmitting information content data to a multiplicity of terminals, having the following steps:
(a) information content data and information description data are provided (S1) in a memory by at least one information provider station (1, 2);
(b) the information content data and the information description data are loaded (S2) into a memory in a central information forwarding station (7);
(c) an information content data block based on the loaded information content data and an information description data block based on the loaded information description data are produced (S3) in the central information forwarding station (7);
(d) the information content data block and the information description data block are logically combined (S4) to produce a transmission data block;
(e) the transmission data block is transmitted (S5) from the central information forwarding station (7) to a multiplicity of terminals (15-19), wherein an event is linked to said data block transmitted via a transmission network to said terminals, which activates in said terminal an applications, such as an Internet browser.

2. Method according to Claim 1, **characterized in that** the transmission data block is checked in the terminal (15-19) for its relevance to the terminal using the information description data block.

3. Method according to Claim 1 or 2, **characterized in that** a transmission data block identified as relevant is stored in a buffer-store in the terminal (15-19) and can be called by a terminal user.

4. Method according to one of the preceding claims, **characterized in that** the information description data block contains information data records regarding the geographical area of validity, the validity period, the data format, the coding style or encryption, the nature and type of the transmitted information content data block.

5. Method according to one of the preceding claims, **characterized in that** the information content data and the information description data are loaded (S2) on the basis of a request signal which is sent from the central forwarding station (7) to the information provider station (1, 2).

6. Method according to one of the preceding claims, **characterized in that** the information content data and the information description data are loaded (S2) automatically at regular, settable intervals of time.

7. Method according to one of the preceding claims, **characterized in that** the transmission data block or blocks is/are transmitted (S5) from the information forwarding station (7) to the terminals (15-19) automatically at regular settable intervals of time.

8. Method according to one of the preceding claims, **characterized in that** the transmission data block or blocks is/are transmitted (S5) from the information forwarding station (7) to a multiplicity of terminals (15-19) simultaneously via a distribution network.

9. Method according to one of the preceding claims, **characterized in that** the transmission data block(s) is/are transmitted in encrypted form.

10. Method according to one of the preceding claims, **characterized in that** the information description data block contains encryption and description data which indicate the nature of the encryption of the transmission data block.

11. Method according to one of the preceding claims, **characterized in that** the decryption data for decrypting the transmission data block are transmitted from the information provider station (1, 2) to the terminal (15-19).

12. Method according to one of the preceding claims, **characterized in that** the information content data and the information description data are loaded by the central information forwarding station (7) via a first transmission network (5), and the transmission data block is transmitted to the multiplicity of terminals (15-19) via a second transmission network (9).

13. Information transmission system having: at least one information provider station (1, 2) for providing information content data and information description data;
a first transmission network (5) for transmitting the information content data and the information description data; a central information forwarding station (7) which has a memory for storing the transmitted data and a computation device for producing an information content data block based on the information content data, for producing an information description data block based on the transmitted information description data and for logically combining the information content data block or blocks with the information description data block or blocks to produce a transmission data block, and
a second transmission network (9) for simultaneously transmitting the transmission data block or blocks to a multiplicity of terminals (15-19), wherein an event is linked to said data block transmitted via a transmission network to said terminals, which activates in said terminal an applications, such as an Internet browser.

14. Information transmission system according to Claim 13, **characterized in that** the first transmission network (5) is a landline network.

15. Information transmission system according to Claim 14, **characterized in that** the first transmission network (5) is the internet.

16. Information transmission system according to Claim 13, **characterized in that** the second transmission network (9) is a radio network of cellular design.

17. Information transmission system according to one of Claims 13-16, **characterized in that** the terminals (15-19) are mobile radio stations.

18. Information transmission system according to Claim 17, **characterized in that** the terminals (15-19) are connected to the information provider stations (1, 2) via a third transmission network for the purpose of transmitting decryption programs.

## Revendications

1. Procédé pour la transmission de données de contenu d'informations à un grand nombre de terminaux comprenant les étapes suivantes :
a) mise à disposition (S1) de données de contenu d'informations et de données de description d'informations dans une unité de mémoire d'au moins un poste de prestataire de services (1, 2) ;
b) chargement (S2) des données de contenu d'informations et des données de description d'informations dans une unité de mémoire d'un poste central de transmission d'informations (7) ;
c) création (S3) d'un module de données de contenu d'informations se fondant sur les données de contenu d'informations chargées et d'un module de données de description d'informations se fondant sur les données de description d'informations chargées dans le poste central de transmission d'informations ;
d) liaison (S4) du module de données de contenu d'informations et du module de données de description d'informations à un module de données de transmission ;
e) transmission (S5) du module de données de transmission du poste central de transmission d'informations (7) à un grand nombre de terminaux (15-19), un résultat étant relié au module de données transmis par le biais d'un réseau de transmission (9) aux terminaux (15 - 19), et activant, dans le terminal (15 - 19), une application telle qu'un navigateur Internet.

2. Procédé selon la revendication 1,
**caractérisé en ce que**
la pertinence du module de données de transmission pour le terminal est contrôlée dans le terminal (15-19) à l'aide du module de données de description d'informations.

3. Procédé selon la revendication 1 ou 2,
**caractérisé en ce que**
un module de données de transmission reconnu comme pertinent est enregistré dans une mémoire intermédiaire du terminal (15-19) et peut être appelé par un utilisateur du terminal.

4. Procédé selon l'une quelconque des revendications précédentes,
**caractérisé en ce que**
le module de données de description d'informations comprend des lots de données d'informations relatifs à l'espace de validité géographique, à la période de validité, au format des données, au mode de codage et/ou au codage, à la nature et au type du module de données de contenu d'informations.

5. Procédé selon l'une quelconque des revendications précédentes,
**caractérisé en ce que**
le chargement (S2) des données de contenu d'informations et des données de description d'informations se produit en fonction d'un signal de sollicitation envoyé par le poste central de transmission (7) au poste de prestataire de services (1, 2).

6. Procédé selon l'une quelconque des revendications précédentes,
**caractérisé en ce que**
le chargement (S2) des données de contenu d'informations et des données de description d'informations se produit automatiquement à intervalles réguliers réglables.

7. Procédé selon l'une quelconque des revendications précédentes,
**caractérisé en ce que**
la transmission (S5) du ou des modules de données de transmission a lieu automatiquement à intervalles réguliers réglables sur les terminaux (15-19) par le poste de transmission d'informations (7).

8. Procédé selon l'une quelconque des revendications précédentes,
**caractérisé en ce que**
la transmission (S5) du ou des modules de données de transmission est réalisée simultanément par le poste de transmission d'informations (7) sur un grand nombre de terminaux (15-19) via un réseau à diffusion.

9. Procédé selon l'une quelconque des revendications précédentes,
**caractérisé en ce que**
le ou les modules de données de transmission est/sont transmis encodés.

10. Procédé selon l'une quelconque des revendications précédentes,
**caractérisé en ce que**
le module de données de description d'informations comprend des données de codage et de description qui indiquent le type du codage du module de données de transmission.

11. Procédé selon l'une quelconque des revendications précédentes,
**caractérisé en ce que**
les données de décodage pour le décodage du module de données de transmission sont transmises au terminal (15-19) par le poste de prestataire de services (1, 2).

12. Procédé selon l'une quelconque des revendications précédentes,
**caractérisé en ce que**
les données de contenu d'informations et les données de description d'informations sont chargées par le poste central de transmission d'informations (7) via un premier réseau de transmission (5) et que le module de données de transmission est transmis au grand nombre de terminaux (15-19) via un deuxième réseau de transmission (9).

13. Système de transmission d'informations comprenant:
- au moins un poste de prestataire de services (1, 2) pour la mise à disposition de données de contenu d'informations et de données de description d'informations ;
- un premier réseau de transmission (5) pour la transmission des données de contenu d'informations et de description d'informations ; un poste central de transmission d'informations (7) qui comporte une unité de mémoire pour mémoriser les données transmises et une unité de calcul pour créer un module de données de contenu d'informations se fondant sur les données de contenu d'informations, pour créer un module de données de description d'informations se fondant sur les données de description d'informations transmises et pour relier le ou les modules de données de contenu d'informations au ou aux modules de données de description d'informations en un seul module de données de transmission, et
- un deuxième réseau de transmission (9) pour la transmission simultanée du ou des modules de données de transmission à un grand nombre de terminaux (15-19), un résultat étant relié au module de données transmis par le biais du réseau de transmission (9) aux terminaux (15 - 19), et activant, dans le terminal (15 - 19), une application telle qu'un navigateur Internet.

14. Système de transmission d'informations selon la revendication 13,
**caractérisé en ce que**
le premier réseau de transmission (5) est un réseau fixe.

15. Système de transmission d'informations selon la revendication 14,
**caractérisé en ce que**
le premier réseau de transmission (5) est Internet.

16. Système de transmission d'informations selon la revendication 13,
**caractérisé en ce que**
le deuxième réseau de transmission (9) est un réseau radio de type cellulaire.

17. Système de transmission d'informations selon l'une quelconque des revendications 13-16,
**caractérisé en ce que**
les terminaux (15-19) sont des stations mobiles.

18. Système de transmission d'informations selon la revendication 17,
**caractérisé en ce que**
les terminaux (15-19) sont reliés aux postes du prestataire de services (1, 2) pour la transmission de programmes de décodage via un troisième réseau de transmission.
